(19) Europäisches Patentamt
European Patent Office
Office européen des brevets

(11) **EP 3 910 303 B1**

(12) **EUROPÄISCHE PATENTSCHRIFT**

(45) Veröffentlichungstag und Bekanntmachung des Hinweises auf die Patenterteilung:
**12.11.2025 Patentblatt 2025/46**

(21) Anmeldenummer: **20305481.2**

(22) Anmeldetag: **12.05.2020**

(51) Internationale Patentklassifikation (IPC):
**G01K 1/16** (2006.01)     **G01K 11/32** (2021.01)
**G01K 11/3213** (2021.01)

(52) Gemeinsame Patentklassifikation (CPC):
**G01K 11/3213; G01K 1/16**

(54) **OPTISCHER TEMPERATURSENSORKOPF, TEMPERATURSENSOREINRICHTUNG UND ELEKTRISCHE MASCHINE MIT EINEM TEMPERATURSENSORKOPF**

OPTICAL TEMPERATURE SENSOR HEAD, TEMPERATURE SENSOR DEVICE AND ELECTRIC MACHINE WITH A TEMPERATURE SENSOR HEAD

TÊTE DE CAPTEUR DE TEMPÉRATURE OPTIQUE, DISPOSITIF DE CAPTEUR DE TEMPÉRATURE ET MACHINE ÉLECTRIQUE DOTÉ D'UNE TÊTE DE CAPTEUR DE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.11.2021 Patentblatt 2021/46**

(73) Patentinhaber: **Nexans**
**92400 Courbevoie (FR)**

(72) Erfinder:
• **STEINBERG, Helmut**
**92685 FLOSS (DE)**
• **VÖLKL, Dietmar**
**92685 FLOSS (DE)**

(74) Vertreter: **Ipsilon**
**Le Centralis**
**63, avenue du Général Leclerc**
**92340 Bourg-la-Reine (FR)**

(56) Entgegenhaltungen:
WO-A2-2012/171768     DE-A1- 10 023 208
DE-T2- 69 513 550     JP-A- 2010 210 404
US-A- 4 988 212     US-A- 5 183 338
US-A1- 2004 258 130

**Beschreibung**

Gebiet

Die Erfindung betrifft eine elektrische Maschine mit einem optischen Temperatursensorkopf, wobei die Temperaturmessung insbesondere durch eine Lumineszenzmessung erfolgt.

Hintergrund

Es gibt zahlreiche Anwendungsfälle, bei denen eine genaue Temperaturmessung wünschenswert ist. Von besonderem Interesse sind vorliegend Anwendungsfälle unter rauen Betriebsbedingungen oder an Stellen, wo hohe Magnetfelder herrschen.

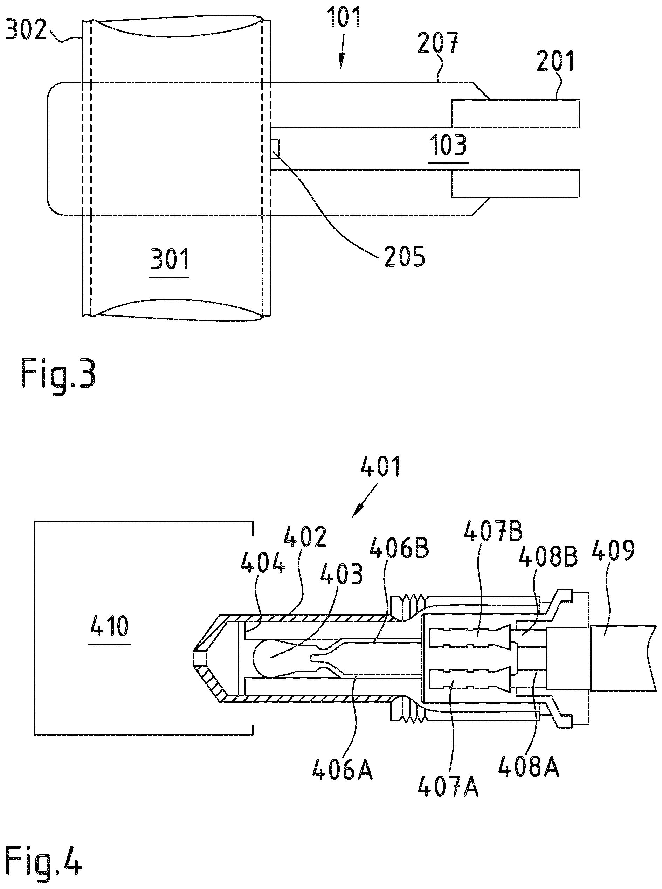

In Fahrzeugen werden gegenwärtig überwiegend thermoelektrische Elemente oder temperaturabhängige Widerstände zur Temperaturmessung eingesetzt, zum Beispiel bei der Messung einer Kühlwassertemperatur. Die dafür verwendeten Temperatursensoren benötigen für diesen Zweck eine ganze Reihe von Komponenten wie in Figur 4 gezeigt ist. Der als Ganzes mit dem Bezugszeichen 401 bezeichnete Temperatursensor weist ein Gehäuse 402 auf, dass ein elektrisches Messelement 403 aufnimmt, das in einem elektrisch isolierenden Halter 404 gehaltert ist. Das elektrische Messelement 403 hat zwei Anschlüsse 406A, 406B, die an Kontaktstellen 407A, 407B mit Leitern 408A, 408B eines Kabels 409 verbunden sind. Das Gehäuse 402 ist mit einem Wärmetransfermedium, zum Beispiel mit einem thermoplastischen Füllstoff gefüllt, um eine gute thermische Ankopplung des Messelementes 403 zu erzielen und dessen Ansprechzeit zu verkürzen. Ein solchermaßen aufgebauter Temperatursensor ist auf lange Sicht, insbesondere wenn zahlreiche Temperaturzyklen durchlaufen werden, durch unterschiedliche thermische Expansionskoeffizienten der verwendeten Materialien von Ausfall bedroht. Dazu kommt, dass die für die Lebensdauer kritischen Elemente eingekapselt sind und nicht repariert werden können. Bei Anwesenheit von Magnetfeldern ist zudem eine geeignete elektromagnetische Abschirmung des Temperatursensors erforderlich, weil sonst durch Induktionsspannungen bzw. - ströme verursachte Messfehler auftreten können.

Wegen des Vorhandenseins von mindestens zwei elektrischen Anschlussleitungen und der in vielen Fällen notwendigen elektromagnetischen Abschirmung ist der Aufbau des Temperatursensors 401 vergleichsweise groß und benötigt daher Kontaktflächen mit einem Durchmesser von mindestens 3 mm an dem Objekt, dessen Temperatur gemessen werden soll.

Diese Eigenschaften von konventionellen Temperatursensoren sind für die Temperaturmessung in elektrischen Maschinen, zum Beispiel elektrischen Antriebsmaschinen oder Generatoren, nachteilig, weil dort typischerweise wenig Platz vorhanden ist und gleichzeitig hohe Magnetfelder herrschen.

Abhilfe bietet eine optische Temperaturmessung, die nicht auf leitungsgebundenen elektrischen Signalen beruht, sondern auf einer temperaturabhängigen Lumineszenzstrahlung, die von einem zuvor mit einem Lichtpuls einer Leuchtdiode angeregten Sensormaterial emittiert wird. Eine für diese Zwecke geeignete Temperaturmesseinrichtung ist zum Beispiel in der US 4 988 212 offenbart. Konkret werden dort zwei unterschiedliche Verfahren vorgeschlagen. Nach einem ersten Verfahren wird die Intensität der emittierten Lumineszenzstrahlung in zwei unterschiedlichen Wellenlängenbereichen gemessen und dann aus dem Verhältnis der Intensitäten die Temperatur des Sensormaterials bestimmt, das die Lumineszenzstrahlung ausstrahlt und mit dem Objekt in thermischem Kontakt steht, dessen Temperatur gemessen werden soll. Nach einem zweiten Verfahren wird das Sensormaterial ebenfalls mit einem Lichtpuls angeregt und dann die Abfallzeit bzw. Lebensdauer der Lumineszenzstrahlung gemessen. Die Intensität der Lumineszenzstrahlung nimmt gemäß der folgenden Formel als Funktion der Zeit ab:

$$I(t) = I_0 \times \exp(-t/\tau),$$

wobei
$I(t)$ die Intensität der Lumineszenzstrahlung als Funktion der Zeit ist; $I_0$ die anfängliche Intensität der Lumineszenzstrahlung ist; und $\tau$ die Abklingzeit bzw. Lumineszenzlebensdauer ist.

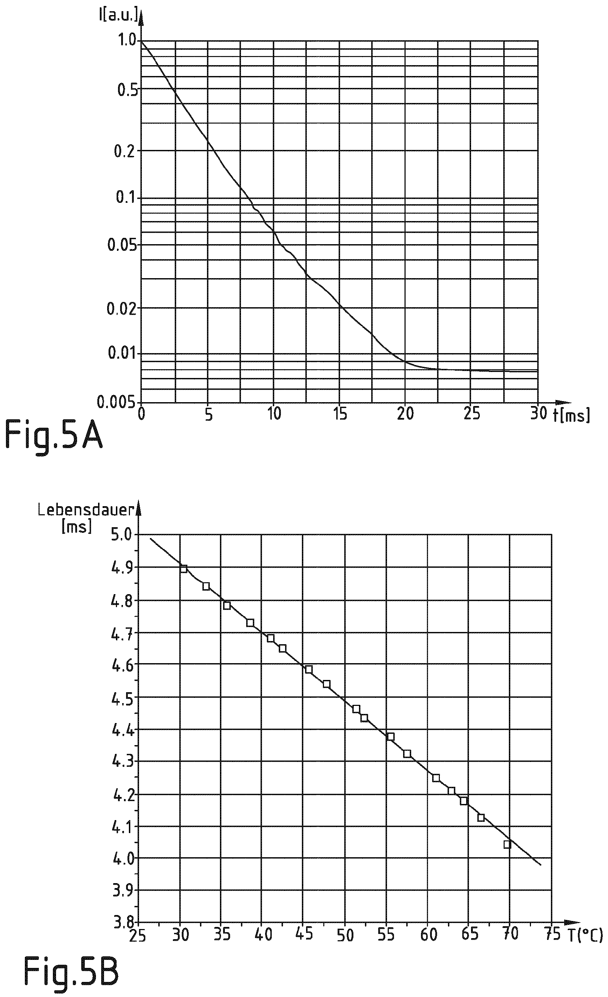

Figur 5A zeigt die Abnahme der Intensität der Lumineszenzstrahlung als Funktion der Zeit und Figur 5B die aus der abklingenden Lumineszenzstrahlung ermittelten Lebensdauer als Funktion der Temperatur. In der praktischen Anwendung wird die Temperatur gemessen, indem zunächst die Lebensdauer der Lumineszenzstrahlung bestimmt wird und dann anhand hinterlegter Daten, die den in Figur 5B dargestellten Zusammenhang zwischen der Lebensdauer und der Temperatur widerspiegeln, die Temperatur ermittelt.

Die in der US 4 988 212 offenbarten Temperaturmesseinrichtung und Temperatursensoren sind von ihrem konstruktiven Aufbau her für automobile Anwendungen weniger geeignet.

Die US 2004/258130 A1 beschreibt einen optischen Temperatursensor zur Messung einer Oberflächentemperatur eines Objektes. Hierfür wird ein Lumineszenzmaterial eingesetzt, das mit einer optischen Faser optisch verbunden ist. Das Lumineszenzmaterial wird mit einer Lichtquelle angeregt und aus einer Analyse der Lumineszenzstrahlung wird die Temperatur ermittelt. Das Anregungslicht für das Lumineszenzmaterial und die Lumineszenzstrahlung werden mittels der optischen Faser übertragen. Bei manchen Ausführungsbeispielen ist ein Schutzkörper vorgesehen, der das Sensormaterial und das freie Ende der optischen Faser umschließt.

Aus der WO 2012/171768 A2 ist ein Verfahren zum Ermitteln der Temperatur in einer Wicklung von Teilleitern einer elektrischen Maschine bekannt, insbesondere in elektrischen Maschinen mit hoher Leistung. Eine Besonderheit bei Maschinen mit hoher elektrischer Leistung ist, dass als Wicklung ein so genannter Rödelstab verwendet wird, der eine Transposition von elektrischen Teilleitern aufweist, die jeweils mit einer Teilleiterisolation ummantelt sind. Die Gesamtheit der Teilleiter ist von einer Hauptisolation umgeben. Zwischen der Hauptisolation und dem obersten Teilleiter ist eine Glasfaser angeordnet, die zwischen Abstandshaltern liegt. Die Glasfaser wird in Längsrichtung des Rödelstabes geführt. In dem obersten Teilleiter des Roedelstabs ist eine Aussparung vorgesehen, wo ein an dem Ende der Glasfaser angeordneter Sensorkopf Platz findet, um die Temperatur des Rödelstabes zu messen.

Hiervon ausgehend hat die vorliegende Erfindung die Aufgabe, Temperatur Messkopf und eine Temperaturmesseinrichtung zu schaffen, um eines oder mehrere der eingangs genannten Probleme zu überwinden oder zumindest zu verbessern.

Beschreibung der Erfindung

Zur Lösung dieser Aufgabe schlägt die Erfindung nach einem ersten Aspekt einen Temperaturmesskopf vor, der Teil einer Temperaturmesseinrichtung ist, die einem zweiten Aspekt der Erfindung entspricht.

Gemäß dem ersten Aspekt der Erfindung wird eine elektrische Maschine mit einem Läufer und einem Stator vorgeschlagen. Der Stator weist eine Wicklung aus einem mit einer Lackschicht elektrisch isolierten Wicklungsdraht auf. Der Wicklungsdraht ist in thermischem Kontakt mit einem optischen Temperatursensorkopf, der eine optische Faser sowie ein Sensormaterial umfasst, das unmittelbar auf dem Wicklungsdraht, dessen Temperatur gemessen wird, angeordnet und mit einem freien Ende der optischen Faser optisch verbunden ist. Das freie Ende der optischen Faser ist von dem Sensormaterial beabstandet.

Das freie Ende der optischen Faser weist eine Umspritzung aus Kunststoffmaterial auf, die das freie Ende der optischen Faser übergreift und die Kontaktstelle bzw. die Kontaktstellen zwischen Wicklungsdraht und Temperatursensorkopf unter Ausbildung eines Schutzkörpers verschließt. Der Schutzkörper umschließt den Wicklungsdraht.

Bei dieser Ausführungsform besteht nur eine optische Verbindung zwischen dem freien Ende der optischen Faser und dem Sensormaterial. Auf diese Weise wird vermieden, dass von der optischen Faser Wärme von der Messstelle abgeführt wird und dadurch das Messergebnis für die Temperatur möglicherweise verfälscht wird. Die Umspritzung die Kontaktstelle bzw. die Kontaktstellen zwischen Wicklungsdraht und Temperatursensorkopf umschließen. Die so ausgebildete Umspritzung hat den Vorteil, dass eine mechanisch stabile Anordnung entsteht, die gegenüber Umwelteinflüssen unempfindlich ist.

Bei einer weiteren Ausführungsform der elektrischen Maschine ist von dem Wicklungsdraht eine Isolierung lokal entfernt, um den thermischen Kontakt zwischen dem Wicklungsdraht und dem Sensormaterial der Temperatursensoreinrichtung zu verbessern. Bei dieser Ausführungsform wird ein Temperaturabfall in der Lackschicht des Wicklungsdrahtes vermieden und die unmittelbare Temperaturmessung an dem Leiter des Wicklungsdrahtes ermöglicht.

In einer zweckmäßigen Ausführungsform ist die optische Faser eine polymere optische Faser (POF). POF sind im Vergleich zu Glasfasern einfacher herzustellen, haben ein geringeres Gewicht, sind biegeflexibel und können mittels handelsüblicher Steckverbindungen miteinander verbunden werden.

In einer vorteilhaften Weiterbildung ist das Sensormaterial ein Kristall, der an dem freien Ende der optischen Faser angeordnet ist. Als Kristall kommt hierbei insbesondere Rubin infrage. Anstelle eines Einkristalls ist bei einer abgewandelten Ausführungsform ein transparentes Bindermaterial vorgesehen sein, in welchem kleine lumineszierende Kristalle eingebettet sind, zum Beispiel Rubinkristalle.

Bei den erfindungsgemäßen Ausführungsformen, die einen Abstand zwischen dem Sensormaterial und dem Ende der optischen Faser aufweisen, ist es vorteilhaft, wenn die Umspritzung einen Raum abschließt, der zwischen dem Sensormaterial und dem Ende der optischen Faser bzw. der Sammellinse liegt. Bei dieser Ausführungsform sind das Sensormaterial und die Sammellinse in einem abgeschlossenen Raum, sodass deren optische Eigenschaften durch Schmutz, Feuchtigkeit und dergleichen nicht ungünstig beeinflusst wird.

In einer abgewandelten Ausführungsform kann das Sensormaterial als Schicht auf das Objekt aufgetragen sein, dessen Temperatur gemessen wird. Bei manchen Anwendungsfällen kann es vorteilhaft sein, wenn das Sensormaterial in Form von kleinen Kristallen vorliegt, die in einem Lack oder einem Kunststoff verteilt sind, der auf eine Oberfläche aufgetragen wird, deren Temperatur gemessen werden soll.

Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:

Fig. 1A          schematische Aufbau einer Temperaturmesseinrichtung als Blockdiagramm;

Fig. 1B          schematische Aufbau einer weiteren Temperaturmesseinrichtung als Blockdiagramm;

Fig. 2A-2G       schematische Aufbau eines Endes einer polymeren optischen Faser mit Sensormaterial;

Fig. 3      Wicklungsdraht mit einem daran angeordneten Temperatursensorkopf;

Fig. 4      schematische Aufbau eines elektrischen Temperatursensors;

Fig. 5A      zeitlicher Abfall der Intensität einer Lumineszenzstrahlung; und

Fig. 5B      temperaturabhängige Lebensdauer der Lumineszenzstrahlung; und

Gleiche oder ähnliche Elemente sind in den Figuren mit gleichen oder ähnlichen Bezugszeichen versehen.

Ausführungsbeispiel

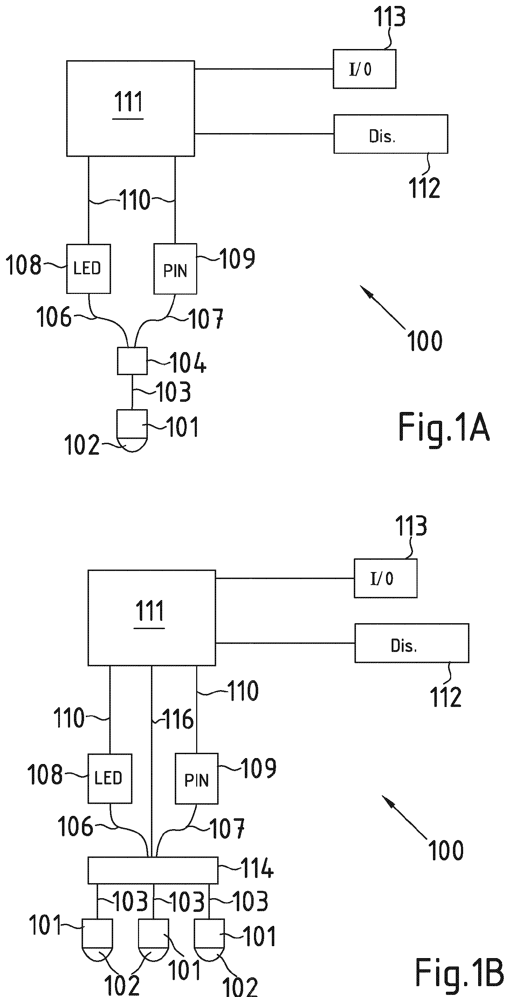

Figur 1A zeigt ein schematisches Blockdiagramm einer Temperaturmesseinrichtung gemäß der vorliegenden Erfindung, die auf der Messung einer Lumineszenzstrahlung beruht. Die Temperaturmesseinrichtung ist als Ganzes mit dem Bezugszeichen 100 bezeichnet. Ein Temperatursensorkopf 101 ist mit einem Sensormaterial 102 ausgerüstet, das durch einen Lichtimpuls zur Lumineszenzstrahlung angeregt wird. Wie eingangs beschrieben lässt sich aus der temperaturabhängigen Lebensdauer der Lumineszenzstrahlung die Temperatur des Sensormaterials 102 ermitteln. In einer praktischen Anwendung wird der Temperatursensorkopf 101 und vor allem das Sensormaterial 102 in thermischen Kontakt mit einem Objekt (nicht dargestellt) gebracht, dessen Temperatur gemessen werden soll.

Der Temperatursensorkopf 101 befindet sich an einem freien Ende einer optischen Faser, insbesondere einer polymeren optischen Faser (POF) 103. Die optische Faser 103 führt zu einem Faserkoppler 104, der die optische Faser 103 mit zwei optischen Fasern 106,107 verbindet, die ihrerseits vorzugsweise polymere optische Fasern sind. Die POF 106 stellt eine optische Verbindung zu einer Leuchtdiode 108 her, während die POF 107 eine optische Verbindung zu einem Fotodetektor 109 bereitstellt, der beispielsweise als P-I-N Fotodetektor ausgebildet ist. Die Leuchtdiode 108 und der Fotodetektor 109 sind mittels elektrischer Leitungen 110 mit einer Steuerung 111 zur Übertragung von Signalen und Versorgungsspannungen elektrisch verbunden. Die Steuerung 111 ist an ein Display 112 angeschlossen, auf den zum Beispiel die gemessene Temperatur angezeigt wird. Darüber hinaus weist die Steuerung eine Schnittstelle 113 auf, die es ermöglicht die Temperaturmesseinrichtung 100 mit einem Datenbus (nicht dargestellt) zu verbinden.

Grob gesagt funktioniert die Steuerung 111 so, dass die Leuchtdiode 108 einen Lichtimpuls auf das Sensormaterial 102 sendet und dadurch Lumineszenzstrahlung anregt. Die Leuchtdiode emittiert zum Beispiel grünes Licht im Wellenlängenbereich von 500nm-580 nm, das mit einer Frequenz von 50 Hz moduliert wird. Die Lichtpulsdauer beträgt ungefähr 5ms. Bei Glasfaserlichtwellenleitern wird Licht im Wellenlängenbereich von 800 nm bis 1600 nm benutzt. In anderen Ausführungsbeispielen können andere Wellenlängen, eine andere Modulationsfrequenz und andere Lichtpulsdauern zweckmäßig sein, was davon abhängt, mit welcher Wellenlänge eine Lumineszenzstrahlung des Sensormaterials angeregt werden kann und wie lange die Lebensdauer dieser Lumineszenzstrahlung ist.

Der zeitliche Abfall der Lumineszenzstrahlung wird in dem Fotodetektor 109 beobachtet. Aus den Messsignalen des Fotodetektor 109 ermittelt die Steuerung 111 die Lebensdauer der Lumineszenzstrahlung und schließlich die Temperatur des Sensormaterials 102, wie eingangs bereits erläutert wurde. In der praktischen Anwendung steht das Sensormaterial 102 in thermischen Kontakt mit einem Objekt (nicht dargestellt), dessen Temperatur gemessen wird. Somit entspricht die Temperatur des Sensormaterials 102 im Wesentlichen der Temperatur des gemessenen Objektes.

Bei einem konkreten Ausführungsbeispiel haben die POF 103,106 und 107 einen Durchmesser von 1 mm und bestehen aus einem 0,98 mm dicken Kern aus PMMA (Polymethylmethacrylat) sowie einem 0,02 mm dicken optischen Mantel aus fluoriertem Acrylat oder Fluorpolymer. Der optische Mantel wird in Englisch auch als "cladding" bezeichnet. Über dem optischen Mantel ist in der Regel ein mechanisch schützender Mantel angeordnet (Englisch: "coating"). Die Vorteile der POF sind der kleine Durchmesser, ihr geringes Gewicht, eine gute Biegsamkeit und die Unempfindlichkeit gegenüber elektromagnetischen Einflüssen. Außerdem sind POF mit einfachen Steckverbindungen verbindbar. Bei der Verwendung in Fahrzeugen, wo die Temperaturmesseinrichtung 100 Umwelteinflüssen ausgesetzt ist, ist es erforderlich insbesondere den Temperatursensorkopf 101 mit dem Sensormaterial 102 dagegen zu schützen. Zu den Umwelteinflüssen gehören Feuchtigkeit, Staub und Vibrationen, um nur einige Beispiele zu nennen.

In Figur 1B ist eine Temperaturmesseinrichtung 100'dargestellt, die mehrere Temperatursensorköpfe 101 aufweist. Die Temperatursensorköpfe 101 sind mit einem optischen Multiplexer 114 verbunden, der es gestattet einen Lichtimpuls der Leuchtdiode 108 gezielt zu einem der Sensorköpfe 101 zu leiten und nach dem Lichtpuls die Lumineszenzstrahlung des betreffenden Temperatursensorkopfes 101 zu messen und auszuwerten. Zu diesem Zweck wird der optische Multiplexer 114 von der Steuerung 111 über eine Steuerleitung 116 in entsprechender Weise angesteuert. In Figur 1B sind zwar drei Temperatursensorköpfe 101 dargestellt, aber in anderen Ausführungsformen können auch nur zwei oder mehr als drei Temperatursensorköpfe 101 vorhanden sein.

Bei einer weiteren, nicht dargestellten Ausführungsform ist jedem Temperatursensorkopf 101 jeweils eine Leuchtdiode 108 und ein Fotodetektor 109 zugeordnet.

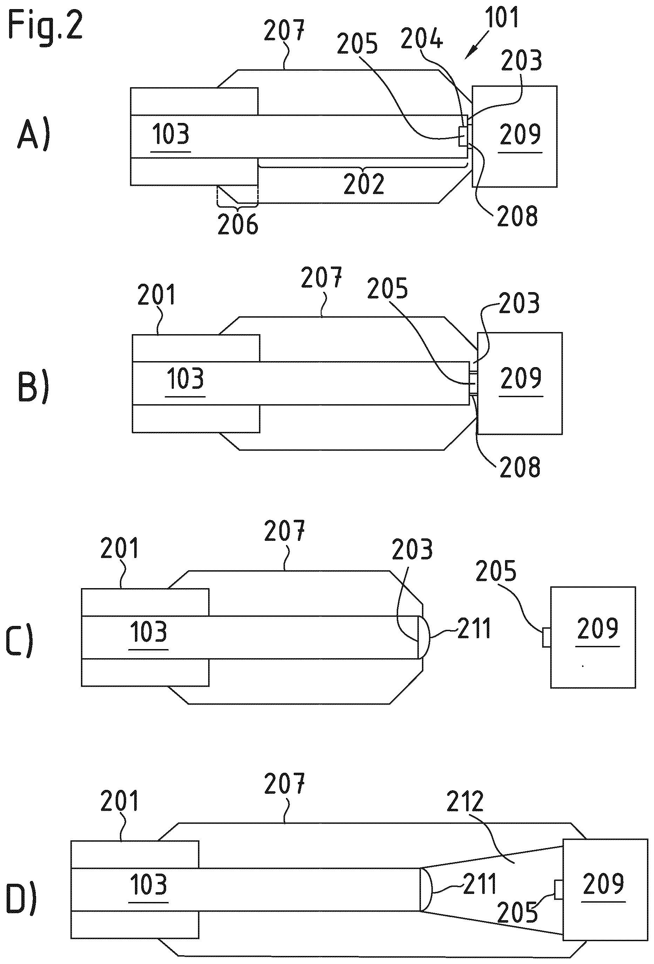

In den Figuren 2A bis 2G sind unterschiedliche Beispiele des Temperatursensorkopfes 101 für eine Temperaturmesseinrichtung 100 dargestellt.

Figur 2A zeigt ein erstes Beispiel des Temperatursensorkopfes 101. Die POF 103 ist von einem Schutzmantel 201 umgeben, der die POF 103 vor Umwelteinflüssen und mechanischer Beschädigung schützt. Von einem freien Ende 202 der POF 103 ist der Schutzmantel 201 entfernt. An einer Stirnseite 203 der POF 103 ist eine Vertiefung 204 zur Aufnahme von Sensormaterial 205 ausgebildet. Das Sensormaterial 205 ist beispielsweise ein Rubinkristall. Über einen Abschnitt 206 des Schutzmantels 201 und das freie Ende 202 der POF 103 ist ein Schutzkörper 207 gespritzt, der das freie Ende 202 der POF 103 mechanisch stabil und unempfindlich gegenüber Umwelteinflüssen macht. In dem Schutzkörper 207 ist angrenzend an das Sensormaterial 205 ein Fenster 208 angeordnet, dass mit einem gut wärmeleitfähigen Material gefüllt ist. Das Fenster 208 und der Schutzkörper 207 liegen an einen Objekt 209 an, so dass das Sensormaterial 205 in gutem thermischem Kontakt mit dem Objekt 209 steht. Auf diese Weise ist eine optische Temperaturmessung an dem Objekt 209 wie oben beschrieben möglich. Zur Befestigung des Schutzkörpers an dem Objekt ist bei einem Ausführungsbeispiel der Schutzkörper 207 mit einem nicht dargestellten Gewinde versehen, das es ermöglicht dem Temperatursensorkopf 101 an dem Objekt 209 fest zu schrauben. Bei alternativen Ausführungsbeispielen ist der Sensorkopf an einer Oberfläche des Objektes 209 angeklebt.

Figur 2B ist ein zweites Beispiel des Temperatursensorkopfes 101 gezeigt. Dieses zweite Beispiel unterscheidet sich von dem in Figur 2A dargestellten ersten Beispiel dadurch, dass das Sensormaterial 205 direkt auf der Stirnseite 203 der POF 103 angeordnet ist. D.h., die Stirnseite 203 der POF 103 weist keine Vertiefung auf. Das Sensormaterial 205 ragt bei diesem zweiten Beispiel in das Fenster 208 in dem Schutzkörper 207 hinein und bildet mit der Stirnfläche des Schutzkörpers eine plane Fläche. Das Sensormaterial 205 kommt in unmittelbaren Kontakt mit dem Objekt 209, wodurch eine gute thermische Ankopplung an das Objekt 209 erreicht wird.

In Figur 2C ist ein drittes Beispiel des Temperatursensorkopfes 101 dargestellt, bei der auf der Stirnseite 203 der POF 103 eine plankonvexe Linse 211 angeordnet ist. Die Linse ist beispielsweise mit einem optisch transparenten Kleber auf die Stirnseite 203 aufgeklebt. Die Linse 211 sammelt ein fallendes Licht und bündelt es in die POF 103. Das Sensormaterial 205 ist bei diesem Beispiel unmittelbar auf dem Objekt 209 angeordnet. Das Sensormaterial ist zum Beispiel ein aufgeklebter Rubinkristall. Im Unterschied zu den ersten beiden Beispielen gibt es keinen physischen Kontakt zwischen der POF 103 und dem Sensormaterial 205, sondern es besteht lediglich eine optische Verbindung zwischen beiden. Die Temperaturmessung erfolgt dennoch nach dem gleichen Prinzip, indem ein Lichtpuls in dem Sensormaterial 205 Lumineszenzstrahlung anregt, die von der Linse 211 gesammelt und in der Steuerung 111 ausgewertet wird wie es im Zusammenhang mit Figur 1 beschrieben wurde.

Da es keine Berührung zwischen der POF 103 und dem Sensormaterial 205 gibt, sind bei diesem Beispiel Messfehler ausgeschlossen, die entstehen, weil eine bestimmte Wärmemenge durch die POF 103 von dem Sensormaterial 205 abgeführt wird und dadurch die von dem Sensormaterial 205 gemessene Temperatur - wenn auch nur geringfügig - niedriger ist als die tatsächliche Temperatur des Objektes 209.

In Figur 2D ist ein viertes Beispiel des Temperatursensorkopfes 101 gezeigt. Dieses Beispiel unterscheidet sich von dem in Figur 2C gezeigten Beispiel dadurch, dass der Schutzkörper 207 bis zu dem Objekt 209 reicht und in seinem Inneren einen Hohlraum 212 bildet. Der Hohlraum 212 erstreckt sich von der Linse 211 bis zu dem Objekt 209 und nimmt das Sensormaterial 205 auf. Der Schutzkörper 207 schützt sowohl die Linse 211 als auch das Sensormaterial 205 vor möglicherweise schädlichen Umwelteinflüssen.

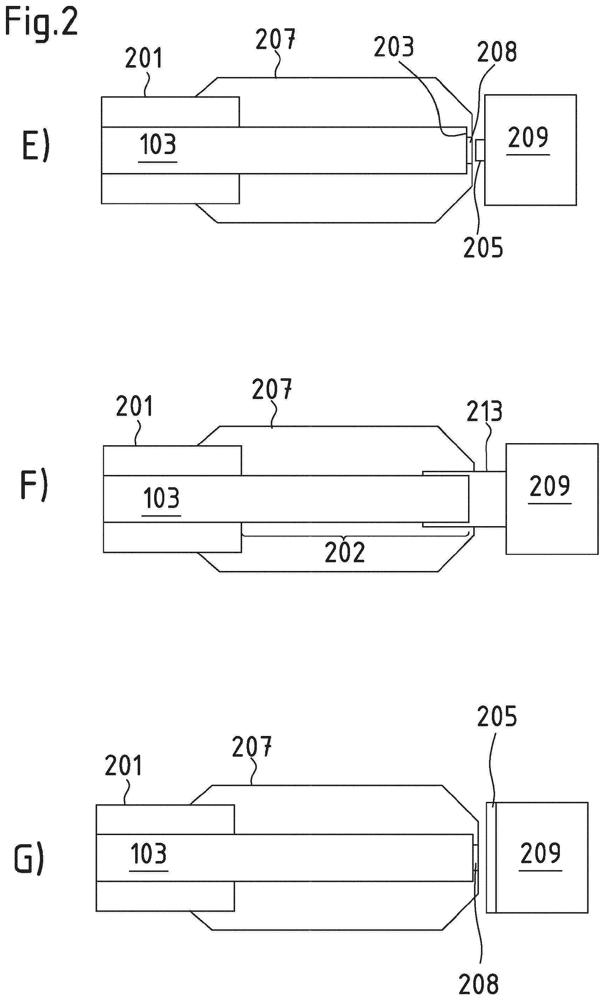

Figur 2E zeigt eine fünfte Ausführungsform des Temperatursensorkopfes 101. Der Schutzkörper 207 weist ein Fenster 208 auf, das einen Abstand von weniger als 1 mm von dem Sensormaterial 205 hat. Das Sensormaterial 205 ist wiederum mit dem Objekt 209 verbunden, zum Beispiel auf das Objekt 209 aufgeklebt. Lumineszenzstrahlung, die in dem Sensormaterial 205 durch einen Lichtpuls erzeugt wird, tritt durch das Fenster 208 in die POF 103 ein. Wegen des geringen Abstandes zwischen der Stirnfläche 203 der POF 103 und dem Sensormaterial 205 ist eine Sammellinse verzichtbar.

Figur 2F illustriert ein sechstes Beispiel des Temperaturkopfes 101. Bei diesem Beispiel ist auf das freie Ende 202 der POF 103 eine Kappe 213 aufgesetzt, die aus einem transparenten Polymer hergestellt ist, in welchem kleine Rubinkristalle oder ein anderes Lumineszenzmaterial eingebettet sind. Der Schutzkörper 207 erstreckt sich über den Schutzmantel 201 und die Kappe 213. Die Kappe 213 steht in thermischem Kontakt mit dem Objekt 209 und ermöglicht dadurch eine Temperaturmessung des Objektes 209.

Figur 2G zeigt dem Sensorkopf 101 aus Figur 2E, wobei bei diesem Beispiel auf dem Objekt 209 das Sensormaterial 205 als ein Lack oder ein Bindermaterial aufgetragen ist, welche kleine Rubinkristalle enthalten. Lumineszenzstrahlung, die in dem Sensormaterial 205 erzeugt wird, tritt wie bei dem Ausführungsbeispiel aus Figur 2E durch das Fenster 208 in dem Schutzkörper 207 in die POF 103 ein.

Figur 3 zeigt einen vergrößerten Ausschnitt eines Wicklungsdrahtes 301 einer elektrischen Maschine, wie zum Beispiel eines Elektromotors oder eines Generators. Der Elektromotor kann zum Beispiel der Antriebsmotor eines elektrischen Fahrzeuges sein. Der Wicklungsdraht ist mit einer Lackschicht 302 elektrisch isoliert. Auf die Lackschicht 302 ist ein Temperatursensorkopf 101 aufgesetzt, der im Wesentlichen wie der in Figur 2A gezeigte Temperatursensorkopf 101 aufgebaut ist. Das Sensormaterial 205 des Temperatursensorkopfes 101 ist in unmittelbarem Kontakt mit der Lackschicht 302. Das Sensormaterial 205 misst somit die Temperatur der Lackschicht 302. Der Schutzkörper 207 ist in diesem Fall um den Wicklungsdraht 301 und die POF 103 bzw. den Schutzmantel 201 herumgespritzt. Dadurch entsteht eine mechanisch stabile Anordnung, die unempfindlich ist gegenüber Umwelteinflüssen.

Bei einem nicht dargestellten Ausführungsbeispiel wird in die Lackschicht und/oder in den Kupferdraht ein kleines Loch gebohrt oder geätzt, in welches das freie Ende 202 der POF 103 eingesteckt ist. Diese Anordnung ist ebenfalls von einem Schutzkörper 207 umspritzt, der sowohl den Wicklungsdraht 301 als auch die POF 103 bzw. den Schutzmantel 201 umschließt. Mit dieser Anordnung ist es möglich, die Temperatur des Leiters des Wicklungsdrahtes zu messen.

Die geringe Baugröße des erfindungsgemäßen Temperatursensorkopfes 101, die Biegsamkeit der POF 103 und die Unempfindlichkeit der optischen Temperaturmessung gegenüber hohen Magnetfeldern ermöglichen es, Temperaturen im Inneren einer elektrischen Maschine zu messen. Zweckmäßigerweise können auch mehrere Temperatursensorköpfe in der elektrischen Maschine angeordnet sein, welche die Temperaturmessung an kritischen Stellen im Inneren der elektrischen Maschine ermöglichen. Die mehreren POF 103 der Temperatursensorköpfe sind zu diesem Zweck an einen optischen Multiplexer 104 angeschlossen, so dass eine einzige Leuchtdiode 108 und ein einziger Fotodetektor 109 genügt, um die Temperaturmessung mit den mehreren Temperatursensorköpfen 101 durchzuführen. Ein schematischer Aufbau einer solchen Temperaturmesseinrichtung 100' ist in Figur 1B dargestellt.

Die Verbindung des Temperatursensorkopfes mit einem Wickeldraht kann zum Beispiel bereits vor der Herstellung der Wicklung für die elektrische Maschine erfolgen. Die POF wird in diesem Fall aus der fertigen Wicklung herausgeführt und mit einer Steckverbindung an eine Temperaturmesseinrichtung angeschlossen.

Obwohl die Erfindung überwiegend im Zusammenhang mit POF beschrieben wurde, ist sie auch mit anderen optischen Fasern, insbesondere mit Glasfasern realisierbar, die für höhere Temperaturen besser geeignet sind.

**Patentansprüche**

1. Elektrische Maschine mit einem Läufer und einem Stator und mit einem optischen Temperatursensorkopf (101), wobei der Stator eine Wicklung aus einem mit einer Lackschicht (302) elektrisch isolierten Wicklungsdraht (301) aufweist, wobei der Wicklungsdraht in thermischem Kontakt mit dem optischen Temperatursensorkopf (101) ist, der eine optische Faser (103) sowie ein Sensormaterial (205) umfasst, das unmittelbar auf dem Wicklungsdraht, dessen Temperatur gemessen wird, angeordnet und mit einem freien Ende (202) der optischen Faser optisch (103) verbunden ist, **dadurch gekennzeichnet, dass** das freie Ende (202) der optischen Faser von dem Sensormaterial (205) beabstandet, dass das freie Ende (202) der optischen Faser eine Umspritzung (207) aus Kunststoffmaterial aufweist, die das freie Ende der optischen Faser übergreift und die Kontaktstelle bzw. die Kontaktstellen zwischen Wicklungsdraht (301) und Temperatursensorkopf (101) unter Ausbildung eines Schutzkörpers (207) verschließt, und dass der Schutzkörper (207) den Wicklungsdraht umschließt.

2. Elektrische Maschine nach Anspruch 1, **dadurch gekennzeichnet, dass** von dem Wicklungsdraht (301) eine Isolierung (302) lokal entfernt ist, um den thermischen Kontakt zwischen dem Wicklungsdraht und dem Sensormaterial des Temperatursensorkopfes zu verbessern.

3. Elektrische Maschine nach Anspruch 1, **dadurch gekennzeichnet, dass** die optische Faser eine polymere optische Faser (103) ist.

4. Elektrische Maschine nach einem der vorstehenden Ansprüche, **dadurch gekennzeichnet, dass** das Sensormaterial (205) ein Kristall ist, der an dem freien Ende (202) der optischen Faser angeordnet ist.

5. Elektrische Maschine nach Anspruch 4, **dadurch gekennzeichnet, dass** an dem freien Ende (202) der optischen Faser eine Vertiefung (204) ausgebildete Aufnahme vorgesehen ist, die das Sensormaterial (205) aufnimmt.

6. Elektrische Maschine nach Anspruch 1, **dadurch gekennzeichnet, dass** auf dem freien Ende (202) der optischen Faser eine Sammellinse (211) angeordnet ist, die einfallendes Licht in die optische Faser (103) bündelt.

7. Elektrische Maschine nach Anspruch 1 oder 6, **dadurch gekennzeichnet, dass** die Umspritzung (207) einen Raum (212) abschließt, der zwischen dem Sensormaterial (205) und dem Ende der optischen Faser (103) bzw. der Sammellinse (211) liegt.

8. Elektrische Maschine nach Anspruch 1, **dadurch gekennzeichnet, dass** das Sensormaterial (205) als Schicht auf das Objekt (209) aufgetragen ist, dessen Temperatur gemessen wird.

## Claims

1. Electrical machine having a rotor and a stator and having an optical temperature sensor head (101), wherein the stator comprises a winding made of a winding wire (301) electrically insulated with a lacquer layer (302), wherein the winding wire is in thermal contact with the optical temperature sensor head (101), the latter comprising an optical fibre (103) and a sensor material (205) that is arranged directly on the winding wire, the temperature of which is measured, and that is optically (103) connected to a free end (202) of the optical fibre, **characterized in that** the free end (202) of the optical fibre is spaced apart from the sensor material (205), **in that** the free end (202) of the optical fibre comprises an overmoulding (207) made of plastic material, which extends over the free end of the optical fibre and seals the contact point or the contact points between winding wire (301) and temperature sensor head (101) while forming a protective body (207), and **in that** the protective body (207) encloses the winding wire.

2. Electrical machine according to Claim 1, **characterized in that** an insulation (302) is locally removed from the winding wire (301) in order to improve the thermal contact between the winding wire and the sensor material of the temperature sensor head.

3. Electrical machine according to Claim 1, **characterized in that** the optical fibre is a polymer optical fibre (103).

4. Electrical machine according to any of the preceding claims, **characterized in that** the sensor material (205) is a crystal which is arranged at the free end (202) of the optical fibre.

5. Electrical machine according to Claim 4, **characterized in that** a receptacle formed as a depression (204) that receives the sensor material (205) is provided at the free end (202) of the optical fibre.

6. Electrical machine according to Claim 1, **characterized in that** a converging lens (211) that focuses incident light into the optical fibre (103) is arranged on the free end (202) of the optical fibre.

7. Electrical machine according to Claim 1 or 6, **characterized in that** the overmoulding (207) closes off a space (212) that is located between the sensor material (205) and the end of the optical fibre (103) or the converging lens (211).

8. Electrical machine according to Claim 1, **characterized in that** the sensor material (205) is applied as a layer to the object (209), the temperature of which is measured.

## Revendications

1. Machine électrique comprenant un rotor et un stator et comprenant une tête de capteur de température (101) optique, le stator possédant un enroulement constitué d'un fil d'enroulement (301) isolé électriquement par une couche de vernis (302), le fil d'enroulement étant en contact thermique avec la tête de capteur de température (101) optique, laquelle comporte une fibre optique (103) ainsi qu'un matériau de capteur (205) qui est disposé directement sur le fil d'enroulement dont la température est mesurée et relié optiquement à une extrémité libre (202) de la fibre optique (103), **caractérisé en ce que** l'extrémité libre (202) de la fibre optique est espacée du matériau de capteur (205), **en ce que** l'extrémité libre (202) de la fibre optique possède un surmoulage (207) en matière plastique qui recouvre l'extrémité libre de la fibre optique et qui ferme le point de contact ou les points de contact entre le fil d'enroulement (301) et la tête de capteur de température (101) en formant un corps de protection (207), et **en ce que** le corps de protection (207) entoure le fil d'enroulement.

2. Machine électrique selon la revendication 1, **caractérisée en ce qu'**une isolation (302) est localement retirée du fil d'enroulement (301) afin d'améliorer le contact thermique entre le fil d'enroulement et le matériau de capteur de la tête de capteur de température.

3. Machine électrique selon la revendication 1, **caractérisée en ce que** la fibre optique est une fibre optique (103) polymère.

4. Machine électrique selon l'une des revendications précédentes, **caractérisée en ce que** le matériau de capteur (205) est un cristal disposé à l'extrémité libre (202) de la fibre optique.

5. Machine électrique selon la revendication 4, **caractérisée en ce qu'**un logement en forme de renfoncement (204) est prévu à l'extrémité libre (202) de la fibre optique, lequel reçoit le matériau de capteur (205).

6. Machine électrique selon la revendication 1, **caractérisée en ce qu'**une lentille convergente (211) est disposée à l'extrémité libre (202) de la fibre optique, laquelle concentre la lumière incidente dans la fibre optique (103).

7. Machine électrique selon la revendication 1 ou 6, **caractérisée en ce que** le surmoulage (207) délimite un espace (212) qui est situé entre le matériau de capteur (205) et l'extrémité de la fibre optique (103) ou de la lentille convergente (211).

8. Machine électrique selon la revendication 1, **caractérisée en ce que** le matériau de capteur (205) est appliqué sous forme de couche sur l'objet (209) dont la température est mesurée.

Fig.1A

Fig.1B

Fig.2

A)

B)

C)

D)

Fig.2

E)
201  207  203  208
103  209
205

F)
201  207  213
103  209
202

G)
201  207  205
103  209
208

302

301

101

207

103

201

205

**Fig.3**

401

404 402
403
406B
407B
408B 409

410

406A

407A

408A

**Fig.4**

Fig.5A

Fig.5B

**IN DER BESCHREIBUNG AUFGEFÜHRTE DOKUMENTE**

**In der Beschreibung aufgeführte Patentdokumente**

- US 4988212 A
- US 2004258130 A1
- WO 2012171768 A2